# EUROPÄISCHE PATENTSCHRIFT

(11) **EP 2 601 062 B1**
(45) Veröffentlichungstag und Bekanntmachung des Hinweises auf die Patenterteilung: **14.05.2014**
(21) Anmeldenummer: 11730915.3
(22) Anmeldetag: 07.07.2011
(51) Int. Cl.: B60G 21/055, B60G 7/02, B62D 21/11, B62D 25/20

(54) **UNTERBAUSTRUKTUR FÜR EIN KRAFTFAHRZEUG**
UNDERFRAME STRUCTURE FOR A MOTOR VEHICLE
STRUCTURE DE DESSOUS DE CAISSE POUR UN VÉHICULE AUTOMOBILE

(30) Priorität: 04.08.2010 DE 102010033332
(43) Veröffentlichungstag der Anmeldung: 12.06.2013
(73) Patentinhaber: Audi AG, 85045 Ingolstadt (DE)
(72) Erfinder: RUGIES, Stefan, 93051 Regensburg (DE); KRAMER, Tobias, 85134 Stammham (DE)
(86) Internationale Anmeldenummer: PCT/EP2011/003396
(87) Internationale Veröffentlichungsnummer: WO 2012/016622

(56) Entgegenhaltungen:
- EP-A1- 0 891 917
- EP-A2- 1 362 767
- DE-A1- 1 630 256
- DE-A1- 10 239 201
- DE-A1- 19 920 051
- DE-A1-102006 013 547
- DE-B- 1 017 923
- DE-B3- 10 306 098
- FR-A1- 2 810 275
- GB-A- 2 387 155
- US-A1- 2005 082 810

## Beschreibung

Die Erfindung betrifft eine Unterbaustruktur für ein Fahrzeug, insbesondere für ein Kraftfahrzeug, gemäß dem Oberbegriff des Patentanspruches 1.

Im modernen Fahrzeugbau erfordern zum Beispiel Design-Anforderungen bzw. Package-Anforderungen oftmals eine stark abgesenkte Einbaulage von Aggregaten. Damit nähern sich die in der Regel am tiefsten, bezogen auf die Fahrzeughochachsenrichtung, am oder im Aggregat befindlichen und aufgrund ihrer Struktur und Funktion schutzbedürftigsten Komponenten, wie zum Beispiel Ölwannen und dahinterliegende Ansaugvorrichtungen für den Ölkreislauf oder auch Lenkgetriebe, um nur einige Beispiele zu nennen, immer stärker einer für das jeweilige Fahrzeug vorgegebenen Bodengrenzlinie an, die es unbedingt einzuhalten gilt.

Vorderachsanordnungen verfügen gewöhnlich über einen Achsträger, dessen massiv ausgeführter Tragträger konstruktiv so gestaltet ist, dass dieser entweder unter bzw. vor den zu schützenden Komponenten liegt, so dass der Querträger beim Überfahren der Störkontur seine Schutzfunktion ausüben kann und dem Überfahren eines Hindernisses widersteht bzw. ein Darübergleiten ermöglicht, ohne dass sensiblere Komponenten Schaden nehmen.

Derartige allgemein bekannte Anordnungen weisen jedoch den Nachteil auf, dass zur Sicherstellung des Schutzes der Komponenten in jedem Falle ein vor oder unter diesen liegender Querträger über zumindestens die von diesen Komponenten beanspruchte Ausdehnung in Fahrzeugquerrichtung vorhanden sein muss. Diese Anordnung ist oftmals nur kompliziert und aufwändig zu erzielen.

Aus der gattungsbildenden DE 1 630 256 A1 ist bereits eine Stabilisator-Anordnung bekannt, bei der der mittlere, beiderseits an Längsträgern des Kraftfahrzeuges gelagerte Querstab mit einer nach vorne ausladenden Kröpfung versehen ist, die sowohl in der Konstruktionslage als auch bei einem Durchfedern der nach hinten abragenden Stabilisatorarme so nach unten verlegt ist, dass der Querstab dadurch quasi einen Auffahrschutz für die dahinter liegende Ölwanne des Verbrennungsmotors des Antriebsaggregates bildet. Ein vom Prinzip her ähnlicher Aufbau mit einem vorderen unteren Querstab ist auch aus der DE 10 2006 013 547 A1 bekannt.

Aufgabe der Erfindung ist es, eine Unterbaustruktur für ein Fahrzeug, insbesondere für ein Kraftfahrzeug, vorzuschlagen, bei der, insbesondere auch unter Sicherstellung des notwendigen Freiganges des Stabilisators am Hilfsrahmen und von am Hilfsrahmen befestigten Bauteilen, ein dauerhaft wirkungsvoller Auffahrschutz erzielbar ist.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß ist der am Hilfsrahmen gelagerte und in Fahrzeugquerrichtung verlaufende Mittenbereich des Stabilisators in Fahrzeughochachsenrichtung gesehen soweit nach unten verlegt, dass er im Zusammenwirken mit einer unterhalb des Mittenbereichs angeordneten Unterbodenverkleidung einen Auffahrschutz für in Fahrtrichtung bzw. in Fahrzeuglängsrichtung gesehen dahinter positionierte zu schützende Aggregate oder Bauteile bildet.

Dabei wird zum Beispiel bei einem Auffahren auf ein Hindernis (zum Beispiel einem Bordstein) die Unterbodenverkleidung so nach oben verlagert oder nach oben elastisch verformt, dass sich diese an den relativ massiven und biegefesten Mittenbereich des Stabilisators anlegt. Ganz generell kann somit die Unterbodenverkleidung in der Konstruktionslage bzw. im unbelasteten Zustand um einen definierten Spaltabstand vom Mittenbereich des Stabilisators nach unten abgesetzt sein, um im regulären Fahrbetrieb keine Übertragung von Schwingungsanregungen oder Vibrationsgeräuschen zu ermöglichen. Alternativ dazu kann gemäß einer besonders bevorzugten Ausgestaltung aber auch vorgesehen sein, dass die Unterbodenverkleidung bereits in der Konstruktionslage am Mittenbereich des Stabilisators aufliegt. Die durch diese beiden Maßnahmen erzielte zusätzliche Abstützung begünstigt ein Übergleiten des Fahrzeuges über das Hindernis ohne Beschädigung der dahinter positionierten Aggregateteile bzw. des Hilfsrahmens.

Insbesondere in Verbindung mit dieser Ausführungsform ist es nicht unbedingt erforderlich, dass der Mittenbereich des Stabilisators in Fahrzeughochachsenrichtung gesehen dauerhaft so weit nach unten verlegt ist, dass dieser sowohl in der Konstruktionslage als auch im eingefederten Zustand einen Auffahrschutz für in Fahrtrichtung bzw. in Fahrzeuglängsrichtung gesehen dahinter angeordnete zu schützende Aggregate oder Bauteile ausbildet, wenngleich dies die bevorzugte Ausgestaltung ist. Wichtig im Zusammenhang mit diesem Erfindungsaspekt ist vor allem jedoch eine solche Anordnung des Mittenbereich des Stabilisators, der im Zusammenwirken mit der Unterbodenverkleidung eine zuverlässige und funktionssichere Auffahrschutzfunktion für die in diesem Bereich angeordneten Aggregate bzw. Bauteile ausbildet. Das heißt, dass hier zum Beispiel auch eine Stabilisatorausbildung im Sinne der DE 1 630 256 A1 mitsamt einer Unterbodenverkleidung wie zuvor beschrieben zum Einsatz gelangen könnte.

Mit der erfindungsgemäßen Lösung ist somit keine Querträgeranordnung mehr vor oder unterhalb zu schützender Aggregate oder Bauteile, zum Beispiel in Verbindung mit Vorderachsanordnungen, erforderlich, die jeweils immer über nahezu die gesamte Fahrzeugbreite reichen muss, so dass sich für die Querträgeranordnung erhebliche konstruktive Freiräume ergeben. Vielmehr kann der sich ohnehin stets über nahezu die gesamte Fahrzeugbreite erstreckende massiv als Metallrohr oder aus einem Vollmaterial ausgeführte Mittenbereich des Stabilisators in einer vorteilhaften Doppelfunktion genutzt werden, um anstelle der Querträgeranordnung der Unterbaustruktur den Aggregate- bzw. Bauteilschutz im Bereich der Unterbaustruktur zu übernehmen. Je nach der Konstruktion der Unterbaustruktur kann daher gegebenenfalls sogar eine diese versteifende Querträgeranordnung ganz oder wenigstens zum Teil eingespart werden. Besonders bevorzugt ist hierbei eine geradlinige Ausgestaltung des Mittenbereichs ohne Krümmung oder Kröpfung.

Gemäß einer besonders bevorzugten Ausgestaltung wird vorgeschlagen, dass der Mittenbereich des Stabilisators hierzu in etwa im Bereich oder mit einem definierten Spaltabstand oberhalb, insbesondere unmittelbar oberhalb, einer für das jeweilige Fahrzeug vorgebebenen bzw. definierten Bodengrenzlinie verläuft. Dadurch wird ein zuverlässiger und funktionssicherer Schutz für die zu schützenden Aggregate oder Bauteile zur Verfügung gestellt.

Wie bereits zuvor ausgeführt und angedeutet, ist es vorteilhaft, dass wenigstens eine die Unterbaustruktur versteifende Querträgeranordnung vorgesehen ist, zum Beispiel in Form einer Querstrebe, die dann bevorzugt so angeordnet werden kann, dass diese an der jeweils gewünschten Stelle der Unterbaustruktur zum Liegen kommt, insbesondere auch in Fahrtrichtung bzw. in Fahrzeuglängsrichtung zur Fahrzeugmitte hin gesehen hinter dem Mittenbereich des Stabilisators verläuft. Mit einer derartigen bevorzugt flächigen bzw. plattenförmigen Querstrebenanordnung wird somit der Querträger an der Unterbaustruktur in seiner herkömmlichen Funktion als querversteifendes Element eingesetzt, ohne dabei zwingend eine Schutzfunktion für in Verbindung mit der Unterbaustruktur vorgesehene bzw. angeordnete Aggregate oder Bauteile übernehmen zu müssen, wenngleich dies selbstverständlich auch nicht ausgeschlossen ist, falls sich dieses konstruktiv einfach ergeben sollte. Insbesondere kann mit einer derartigen erfindungsgemäßen Lösung, bei der die Schutzfunktion auf den Mittenbereich des Stabilisators übertragen wird, eine Querträger- bzw. Querstrebenanordnung umgesetzt werden, die gegebenenfalls auch wesentlich kürzer baut und sich somit nur über einen Teilbereich der Fahrzeugquerrichtung erstreckt als dies bei Querträgeranordnungen der Fall ist, die die Schutzfunktion für zum Beispiel ein Lenkgetriebe oder dergleichen übernehmen müssen. Dadurch ergeben sich die zuvor angesprochenen erheblichen konstruktiven Freiheiten in Verbindung mit der Auslegung bzw. dem Einsatz einer Querträgeranordnung.

Die erfindungsgemäße Unterbaustruktur ist besonders bevorzugt in Verbindung mit dem Einsatz eines Hilfsrahmens als Bestandteil der Unterbaustruktur. An einem derartigen Hilfsrahmen sind regelmäßig das wenigstens eine oder wenigstens ein Aggregat und/oder Radführungselemente einer Radaufhängung eines Kraftfahrzeugs gelagert. Bevorzugt ist der Stabilisator an dem Hilfsrahmen angelenkt, wobei weiter bevorzugt vorgesehen ist, dass der in der Draufsicht U-förmige Stabilisator beiderseits des Hilfsrahmens in Drehlagern gelagert ist und/oder mit seinen in Fahrzeuglängsrichtung bzw. in Fahrtrichtung weisenden Armen mit Radführungselementen gekoppelt ist.

Besonders bevorzugt kann dabei die Unterbodenverkleidung plattenförmig und/oder im Bereich des Mittenbereichs des Stabilisators verstärkt ausgebildet sein, wodurch deren Abweisfunktion mit einfachen Mitteln noch erhöht ist.

Des Weiteren kann an der Unterbodenverkleidung wenigstens ein dem Mittenbereich des Stabilisators zugewandtes Abstützelement vorgesehen sein, das bevorzugt bei einer nach unten ebenen, strömungsdynamisch günstigen Gestaltung des Unterbodens nach oben eine definierte Anpassung an konstruktiv gegebene, geometrische Ausbildungen des Hilfsrahmens und/oder des Stabilisators und damit verbunden eine gleichmäßig verteilte Krafteinleitung bzw. Momentenabstützung ermöglicht.

In besonders vorteilhafter Weiterbildung der Erfindung können die mehreren, entlang des Mittenbereichs des Stabilisators verteilten Vorsprünge als Abstützelemente ausgebildet sein, die zum Beispiel den Mittenbereich in Fahrzeuglängsrichtung formschlüssig einfassen bzw. bei nach oben und hinten wirkenden Auffahrkäften sich an dem Mittenbereich verklammern und die Unterbodenverkleidung zusätzlich stabilisieren.

Die nach hinten abragenden Arme des Stabilisators können bevorzugt durch eine Krümmung um zum Beispiel etwa 90 Grad um wenigstens ein querverlaufendes Aggregat und/oder Bauteil am Hilfsrahmen herumgeführt sein; insbesondere können die Arme des Stabilisators um ein am Hilfsrahmen montiertes Zahnstangen-Lenkgetriebe bzw. um dessen seitlich abragende Spurstangen herumgeführt sein.

Ein Ausführungsbeispiel der Erfindung ist im folgenden mit weiteren Einzelheiten näher erläutert. Die schematische Zeichnung zeigt in:
- Fig. 1: eine Draufsicht von schräg vorne auf eine teilweise dargestellte Unterbaustruktur eines Kraftfahrzeuges, mit einem Hilfsrahmen, einem am Hilfsrahmen gelagerten Stabilisator und einer unterhalb des Querstabes des Stabilisators angeordneten, plattenförmigen Unterbodenverkleidung,
- Fig. 2: eine Seitenansicht gemäß Pfeil X der Fig. 1 auf die Unterbaustruktur und den einen Stabilisatorarm , der mittels einer Krümmung um ca. 90 Grad abgewinkelt um einen Querträger des Hilfsrahmens und um ein Zahnstangen-Lenkgetriebe mit seitlich abragender Spurstange herum nach hinten geführt ist, und
- Fig. 3: einen Schnitt gemäß Linie III - III der Fig. 1 durch den Querstab des Stabilisators und durch die Unterbodenverkleidung mit nach oben abragenden Abstützelementen.

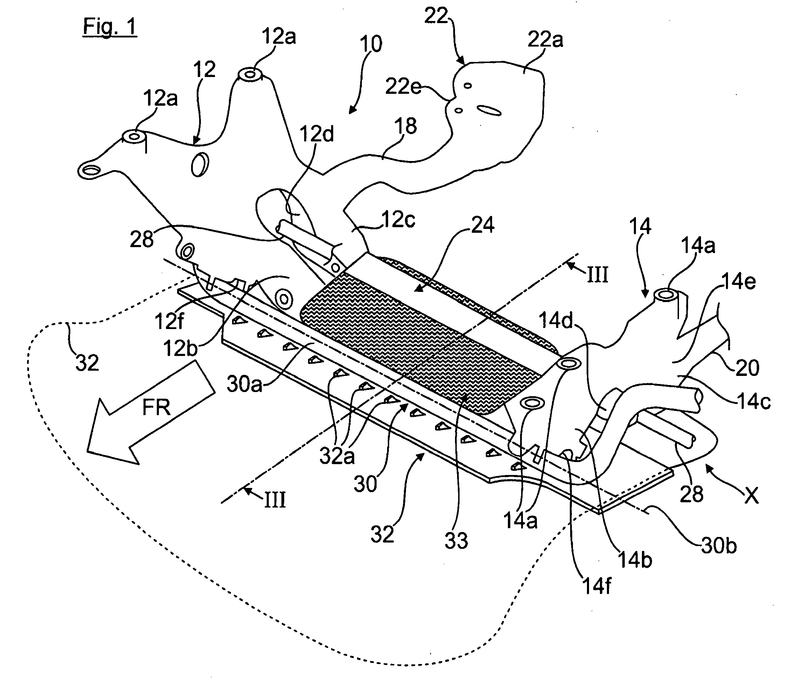

In der Fig. 1 ist mit 10 ein Hilfsrahmen einer vorderen Unterbaustruktur für Kraftfahrzeuge bezeichnet, der sich im Wesentlichen zusammensetzt aus zwei aus Gussformteilen hergestellten Rahmenköpfen 12, 14, zwei entgegen der Fahrtrichtung FR des Kraftfahrzeuges nach hinten gerichteten Längs-, insbesondere Rohrabschnitten 18, 20 mit angeformten Funktions-, insbesondere Gussknoten 22 (es ist in der Zeichnung Fig. 1 nur der rechte Gussknoten 22 ersichtlich, die linke Seite ist spiegelbildlich gleich ausgeführt) und schließlich einer den insoweit U-förmig ausgebildeten Hilfsrahmen 10 aussteifenden, unteren plattenartigen Querstrebe 24 als Querträger.

Die Rahmenköpfe 12, 14 und die endseitigen Gussknoten 22 weisen Befestigungsflansche 12a, 14a, 22a auf, über die der Hilfsrahmen 10 an nicht dargestellten Längsträgern des Aufbaus des Kraftfahrzeuges angeschraubt ist.

Die nach unten und innen abragenden Tragarme 12b, 12c bzw. 14b, 14c mit einer dazwischen befindlichen Ausnehmung 12d, 14d sind zum Beispiel mittels Befestigungsschrauben (nicht dargestellt) mit der Querstrebe 24 fest verschraubt. Ferner weisen sowohl die hinteren Tragarme 12b, 14b als auch die endseitigen Gussknoten 22 Lagerkonsolen 12e, 14e bzw. 22e auf, an die Radführungselemente der vorderen Radaufhängung des Kraftfahrzeuges angeschlossen sind.

Ein hier lediglich exemplarisch dargestelltes Zahnstangen-Lenkgetriebe 26 ist beispielsweise mit der Querstrebe 24 und/oder mit den Tragarmen 12b, 12c, 14b, 14c fest verbunden, zum Beispiel verschraubt. Die von dem Lenkgetriebe 26 seitlich abragenden Spurstangen 28 (in Fig. 1 nur angedeutet, das Lenkgetriebe 26 ist hier der besseren Übersichtlichkeit wegen nicht eingezeichnet) erstrecken sich durch die Ausnehmungen 12d, 14d der Rahmenköpfe 12, 14 des Hilfsrahmens 10 hindurch und sind mit Lenkarmen der nicht dargestellten Radaufhängung gelenkig verbunden.

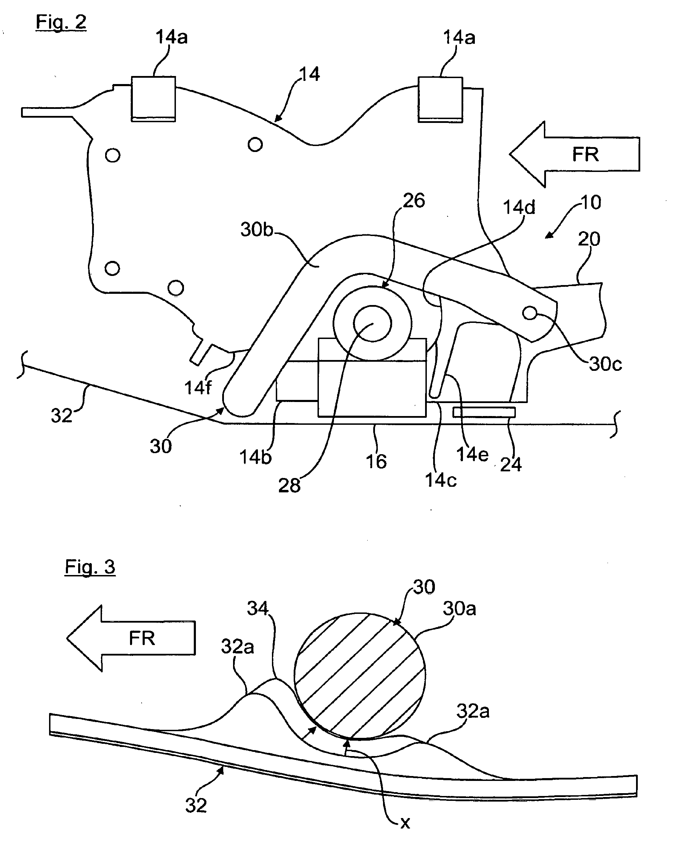

Ein in der Draufsicht etwa U-förmige Drehstab-Stabilisator 30 der Radaufhängung des Kraftfahrzeuges ist an der Unterseite der Tragarme 12b, 14b der Rahmenköpfe 12, 14 an dort angeformten, halbschalenförmigen Lageraufnahmen 12f, 14f beiderseits seines geradlinigen, ungekrümmten Mittenbereichs 30a um die Torsionsachse 30b drehbar gelagert, während sich die seitlich nach hinten abragenden Arme 30b um 90 Grad abgewinkelt von den Lageraufnahmen 12f, 14f zunächst nach oben und um das Lenkgetriebe 26 bzw. die Spurstangen 28 herum erstrecken (vergleiche insbesondere Fig. 2). An den Endbereichen der Arme 30b sind diese mit Lageraugen 30c zum Anschluss an Federbewegungen ausführende Radaufhängungselemente versehen.

Die Drehlagerung des geradlinig ausgeführten Mittenbereichs 30a ist in bekannter Weise durch in die Lageraufnahmen 12f, 14f eingesetzte, elastische Lagerbüchsen und diese umschließende, halbkreisförmige Lagerbügel (nicht dargestellt) bewerkstelligt. In den hier gezeigten Darstellungen ist jeweils die Konstruktionslage dargestellt.

An der insoweit dargestellten Unterbaustruktur mit dem Hilfsrahmen 10 - der zudem in nicht dargestellter Weise Lageraufnahmen für ein Antriebsaggregat aufweist, das oberhalb und teilweise von dem Hilfsrahmen umfasst positioniert ist - ist an der Unterseite eine plattenförmige Unterbodenverkleidung 32 (Fig. 1 und 3) vorgesehen, die der Geräuschdämmung und/oder als Spritzschutz und/oder zur aerodynamisch günstigen Komplettierung der Karosserie des Kraftfahrzeuges dient. Die Unterbodenverkleidung 32 ist in üblicher Weise an angrenzenden Bauteilen (nicht dargestellt) des Aufbaus des Kraftfahrzeuges befestigt.

Die nur im hier interessierenden Bereich des Hilfsrahmens 10 bzw. des Stabilisators 30 dargestellte Unterbodenverkleidung 32 aus einem bevorzugt begrenzt elastisch verformbaren Kunststoff definierter Materialstärke ist an ihrer Unterseite im Wesentlichen glattflächig ausgebildet und definiert die zwischen den Rädern des Kraftfahrzeuges vorgegebene Bodenfreiheit des Kraftfahrzeuges und damit eine Bodengrenzlinie 16.

Der Stabilisator 30 bzw. dessen Mittenbereich 30a ist durch die Anordnung der Lageraufnahmen 12f, 14f und durch die 90 Grad Krümmung der Arme 30b soweit nach unten verlegt, dass er nahe oberhalb der die Bodengrenzlinie 16 definierenden Unterbodenverkleidung 32 bzw. nur um ein geringes Maß x entfernt dazu positioniert ist (Fig. 3).

Des Weiteren sind an der Oberseite der Unterbodenverkleidung 32 entlang des Mittenbereichs 30a mehrere, nach oben abragende Vorsprünge bzw. Abstützelemente 32a angeformt, die zwar um das Maß x zum Mittenbereich 30a abgesetzt sind, die aber bei einer Verformung der Unterbodenverkleidung 32, zum Beispiel infolge eines Aufgleitens auf ein Hindernis oder infolge eines Übergleiten eines Hindernisses, nach oben den Mittenbereich 30a umgreifen bzw. umklammern und damit in Fahrzeuglängsrichtung formschlüssig an diesem gehalten sind (vergleiche die gepunktete Linie 34 in Fig. 3).

Durch die Abstützung der Unterbodenverkleidung 32 an dem geradlinigen Mittenbereich 30a des Stabilisators 30 werden bei einem Auffahren des Kraftfahrzeuges auf ein von der Fahrbahn nach oben abragendes Hindernis durch das Aufgleiten des Fahrzeuges die dahinter und unter der Unterbodenverkleidung 32 liegenden Aggregateteile wie der Hilfsrahmen 10 an sich, dessen Querstrebe 24, das Lenkgetriebe 26 und gegebenenfalls weitere Teile des Antriebsaggregates (Ölwanne, etc.) geschützt.

Zur Verbesserung dieses Auffahrschutzes ist die Unterbodenverkleidung 32 im Bereich des darüber liegenden Stabilisators 30 zusätzlich verstärkt, zum Beispiel durch eine erhöhte Materialstärke oder einen widerstandsfähigen Werkstoff, was in der Fig. 1 lediglich schematisch durch den schraffiert eingezeichneten Verstärkungsbereich 33 gezeigt ist, der sich über einen Teilbereich der Unterbodenverkleidung erstreckt.

## Patentansprüche

1. Unterbaustruktur für ein Fahrzeug, insbesondere für ein Kraftfahrzeug, mit wenigstens einem im Bereich der Unterbaustruktur, die vorzugsweise einen diese versteifenden Querträger aufweist, angeordnetem zu schützenden Aggregat oder Bauteil, und mit einem Stabilisator, **dadurch gekennzeichnet, dass** ein in Fahrzeugquerrichtung verlaufender Mittenbereich (30a) des Stabilisators (30) in Fahrzeughochachsenrichtung soweit nach unten verlegt ist, dass er im Zusammenwirken mit einer unterhalb des Mittenbereich (30a) angeordneten Unterbodenverkleidung (32) einen Auffahrschutz für in Fahrtrichtung oder in Fahrzeuglängsrichtung gesehen dahinter positionierte zu schützende Aggregate oder Bauteile (26) bildet.

2. Unterbaustruktur nach Anspruch 1, **dadurch gekennzeichnet, dass** der in Fahrzeugquerrichtung verlaufende Mittenbereich (30a) des Stabilisators (30) in Fahrzeughochachsenrichtung gesehen so weit nach unten verlegt ist, dass dieser unabhängig von einer Querträgeranordnung der Unterbaustruktur sowohl in der Konstruktionslage als auch im eingefederten Zustand einen Auffahrschutz für in Fahrtrichtung bzw. in Fahrzeuglängsrichtung gesehen dahinter angeordnete zu schützende Aggregate (26) oder Bauteile ausbildet.

3. Unterbaustruktur nach Anspruch 1 oder 2, **dadurch gekennzeichnet, dass** der Mittenbereich (30a) des Stabilisators (30) geradlinig verläuft.

4. Unterbaustruktur nach einem der vorhergehenden Ansprüche, **dadurch gekennzeichnet, dass** der Mittenbereich (30a) im Bereich oder mit einem definierten Spaltabstand oberhalb, insbesondere unmittelbar oberhalb, einer für das jeweilige Fahrzeug vorgegebenen bzw. definierten Bodengrenzlinie verläuft.

5. Unterbaustruktur nach einem der vorhergehenden Ansprüche, **dadurch gekennzeichnet, dass** wenigstens eine die Unterbaustruktur versteifende Querstrebe (24) vorgesehen ist, die in Fahrtrichtung bzw. in Fahrzeuglängsrichtung zur Fahrzeugmitte hin gesehen hinter dem Mittenbereich (30a) des Stabilisators (30) verläuft.

6. Unterbaustruktur nach einem der vorhergehenden Ansprüche, **dadurch gekennzeichnet, dass** ein Hilfsrahmen (10), an dem das wenigstens eine oder wenigstens ein Aggregat (26) und/oder Radführungselemente einer Radaufhängung eines Kraftfahrzeugs gelagert ist bzw. sind, Bestandteil der Unterbaustruktur ist.

7. Unterbaustruktur nach Anspruch 6, **dadurch gekennzeichnet, dass** der Stabilisator (30) an dem Hilfsrahmen (10) angelenkt ist, wobei bevorzugt vorgesehen ist, dass der in der Draufsicht U-förmige Stabilisator (30) beiderseits des Hilfsrahmens (10) in Drehlagern (12f, 14f) gelagert ist und/oder mit seinen in Fahrzeuglängsrichtung bzw. in Fahrtrichtung weisenden Armen (30b) mit Radführungselementen gekoppelt ist.

8. Unterbaustruktur nach einem der vorhergehenden Ansprüche, **dadurch gekennzeichnet, dass** die Unterbodenverkleidung (32) plattenförmig und/oder im Bereich des Mittenbereich (30a) des Stabilisators (30) verstärkt ausgebildet ist.

9. Unterbaustruktur nach einem der vorhergehenden Ansprüche, **dadurch gekennzeichnet, dass** an der Unterbodenverkleidung (32) wenigstens ein dem Mittenbereich (30a) des Stabilisators (30) zugewandtes Abstützelement (32a) vorgesehen ist.

10. Unterbaustruktur nach Anspruch 9, **dadurch gekennzeichnet, dass** das wenigstens eine Abstützelement (32a) so ausgebildet und/oder dem Mittenbereich (30a) des Stabilisators (30) so zugeordnet ist, dass dieses den Mittenbereich (30a) dauerhaft oder infolge einer Verlagerung der Unterbodenverkleidung (32) wenigstens bereichsweise umfasst oder umgreift.

11. Unterbaustruktur nach Anspruch 9 oder 10, **dadurch gekennzeichnet, dass** mehrere, entlang des Mittenbereich (30a) des Stabilisators (30) verteilte Vorsprünge als Abstützelemente (32a) vorgesehen sind.

12. Unterbaustruktur nach einem der vorhergehenden Ansprüche, **dadurch gekennzeichnet, dass** die Unterbodenverkleidung (32) in der Konstruktionslage bzw. im unbelasteten Zustand einen definierten Spaltabstand (x) vom Mittenbereich (30a) des Stabilisators (30) aufweist, oder in der Konstruktionslage am Mittenbereich (30a) des Stabilisators (30) anliegt.

13. Unterbaustruktur nach einem der Ansprüche 6 bis 12, **dadurch gekennzeichnet, dass** die nach hinten abragenden Arme (30b) des Stabilisators (30) durch eine konvexe Krümmung, insbesondere eine Krümmung um in etwa 90 Grad um wenigstens ein querverlaufendes Aggregat (26) und/oder Bauteil (28) am Hilfsrahmen (10) herumgeführt sind.

14. Unterbaustruktur nach Anspruch 13, **dadurch gekennzeichnet, dass** die Arme (30b) des Stabilisators (30) um ein am Hilfsrahmen (10) montiertes Zahnstangen-Lenkgetriebe (26) und/oder um dessen Spurstangen (28) herumgeführt sind.

## Claims

1. Underframe structure for a vehicle, particularly a motor vehicle, having at least one assembly or component which is to be protected and which is arranged in the region of the underframe structure which preferably has a cross-member reinforcing said underframe structure, and having a stabiliser, **characterised in that** a central region (30a) of the stabiliser (30) extending in the transverse direction of the vehicle is positioned so far downward, in the direction of the vertical axis of the vehicle, that said central region (30a) forms, in conjunction with an underbody cladding (32) arranged below the central region (30a), a rear end collision protection for assemblies or components (26) which are to be protected and which are positioned therebehind, viewed in the direction of travel or in the longitudinal direction of the vehicle.

2. Underframe structure according to claim 1, **characterised in that** the central region (30a) of the stabiliser (30), extending in the transverse direction of the vehicle, is positioned so far downward, in the direction of the vertical axis of the vehicle, that said centre region (30a) forms, independently of a cross-member arrangement of the underframe structure, both in the design position and in the spring-biased state, a rear end collision protection for assemblies (26) or components which are to be protected and which are arranged therebehind, viewed in the direction of travel or in the longitudinal direction of the vehicle.

3. Underframe structure according to claim 1 or 2, **characterised in that** the central region (30a) of the stabiliser (30) extends in a straight line.

4. Underframe structure according to one of the preceding claims, **characterised in that** the central region (30a) extends in the region of, or at a defined spacing above, particularly directly above, a bottom boundary prescribed or defined for the respective vehicle.

5. Underframe structure according to one of the preceding claims, **characterised in that** at least one transverse strut (24) reinforcing the underframe structure is provided, which extends behind the central region (30a) of the stabiliser (30) viewed in the direction of travel or in the longitudinal direction of the vehicle towards the centre of the vehicle.

6. Underframe structure according to one of the preceding claims, **characterised in that** an auxiliary frame (10) on which the at least one or at least one assembly (26) and/or wheel guide elements of a wheel suspension of a motor vehicle is or are mounted is part of the underframe structure.

7. Underframe structure according to claim 6, **characterised in that** the stabiliser (30) is jointed to the auxiliary frame (10), while it is preferably provided that the stabiliser (30), which is U-shaped in plan view, is mounted in rotary bearings (12f, 14f) on both sides of the auxiliary frame (10) and/or is coupled to wheel guide elements by its arms (30b) pointing in the longitudinal direction of the vehicle or in the direction of travel.

8. Underframe structure according to one of the preceding claims, **characterised in that** the underbody cladding (32) is of sheet-like configuration and/or is reinforced in the area of the central region (30a) of the stabiliser (30).

9. Underframe structure according to one of the preceding claims, **characterised in that** at least one support element (32a) facing the central region (30a) of the stabiliser (30) is provided on the underbody cladding (32).

10. Underframe structure according to claim 9, **characterised in that** the at least one support element (32a) is configured and/or associated with the central region (30a) of the stabiliser (30) such that the support element (32a) surrounds or embraces the central region (30a) permanently or, as a result of a displacement of the underbody cladding (32), at least in parts.

11. Underframe structure according to claim 9 or 10, **characterised in that** a plurality of projections distributed along the central region (30a) of the stabiliser (30) are provided as support elements (32a).

12. Underframe structure according to one of the preceding claims, **characterised in that**, in the design position or in the unloaded state, the underbody cladding (32) is at a defined spacing (x) from the central region (30a) of the stabiliser (30), or bears on the central region (30a) of the stabiliser (30) in the design position.

13. Underframe structure according to one of claims 6 to 12, **characterised in that** the rearwardly projecting arms (30b) of the stabiliser (30) are guided through a convex curvature, particularly a curvature of about 90 degrees, about at least one transversely extending assembly (26) and/or component (28) on the auxiliary frame (10).

14. Underframe structure according to claim 13, **characterised in that** the arms (30b) of the stabiliser (30) are guided around a rack-and-pinion steering gear (26) mounted on the auxiliary frame (10) and/or about the steering links (28) thereof.

## Revendications

1. Structure de dessous de caisse pour un véhicule, notamment pour un véhicule automobile, avec au moins un ensemble ou élément à protéger disposé dans la zone de la structure de dessous de caisse, qui présente de préférence une traverse la rigidifiant, et avec un stabilisateur, **caractérisée en ce qu'**une zone centrale (30a), s'étendant dans la direction transversale du véhicule, du stabilisateur (30) est décalée vers le bas dans la direction verticale du véhicule dans la mesure où elle forme en coopérant avec un revêtement de bas de caisse (32) disposé sous la zone centrale (30a) une protection contre le télescopage pour des ensembles ou éléments (26) à protéger positionnés derrière, vus dans la direction d'avancée ou dans la direction longitudinale du véhicule.

2. Structure de dessous de caisse selon la revendication 1, **caractérisée en ce que** la zone centrale (30a), s'étendant dans la direction transversale du véhicule, du stabilisateur (30), vue dans la direction verticale du véhicule, est décalée vers le bas dans la mesure où elle forme indépendamment d'un agencement de traverse de la structure de dessous de caisse aussi bien à l'état de la construction qu'à l'état comprimé une protection contre le télescopage pour des ensembles (26) ou éléments à protéger disposés derrière, vus dans la direction d'avancée ou dans la direction longitudinale du véhicule.

3. Structure de dessous de caisse selon la revendication 1 ou 2, **caractérisée en ce que** la zone centrale (30a) du stabilisateur (30) est rectiligne.

4. Structure de dessous de caisse selon l'une des revendications précédentes, **caractérisée en ce que** la zone centrale (30a) s'étend dans la zone ou avec un écart défini au-dessus, notamment directement au-dessus, d'une limite de plancher prédéterminée ou définie pour le véhicule respectif.

5. Structure de dessous de caisse selon l'une des revendications précédentes, **caractérisée en ce qu'**est prévue au moins une traverse (24), rigidifiant la structure de dessous de caisse, qui s'étend derrière la zone centrale (30a) du stabilisateur (30), vue dans la direction d'avancée ou dans la direction longitudinale du véhicule en allant vers le milieu du véhicule.

6. Structure de dessous de caisse selon l'une des revendications précédentes, **caractérisée en ce qu'**un faux-châssis (10), sur lequel l'au moins un ou au moins un ensemble (26) et/ou des éléments de guidage de roue d'une suspension de roue d'un véhicule automobile est ou sont montés, fait partie intégrante de la structure de dessous de caisse.

7. Structure de dessous de caisse selon la revendication 6, **caractérisée en ce que** le stabilisateur (30) est articulé avec le faux-châssis (10), dans laquelle il est de préférence prévu que le stabilisateur (30) en forme de U vu de dessus soit monté des deux côtés du faux-châssis (10) dans des paliers rotatifs (12f, 14f) et/ou soit couplé à des éléments de guidage de roue avec ses bras (30b) orientés dans la direction longitudinale du véhicule ou la direction d'avancée.

8. Structure de dessous de caisse selon l'une des revendications précédentes, **caractérisée en ce que** le revêtement de bas de caisse (32) est configuré renforcé en forme de plaque et/ou dans la zone centrale (30a) du stabilisateur (30).

9. Structure de dessous de caisse selon l'une des revendications précédentes, **caractérisée en ce qu'**au niveau du revêtement de bas de caisse (32) au moins un élément d'appui (32a) orienté vers la zone centrale (30a) du stabilisateur (30) est prévu.

10. Structure de dessous de caisse selon la revendication 9, **caractérisée en ce qu'**au moins un élément d'appui (32a) est configuré et/ou associé à la zone centrale (30a) du stabilisateur (30) de sorte qu'il comprend ou enveloppe au moins partiellement la zone centrale (30a) durablement ou à la suite d'un décalage du revêtement de bas de caisse (32).

11. Structure de dessous de caisse selon la revendication 9 ou 10, **caractérisée en ce que** plusieurs saillies réparties le long de la zone centrale (30a) du stabilisateur (30) sont prévues en tant qu'éléments d'appui (32a).

12. Structure de dessous de caisse selon l'une des revendications précédentes, **caractérisée en ce que** le revêtement de bas de caisse (32) présente dans la configuration de la construction ou à l'état non chargé un écart défini (x) par rapport à la zone centrale (30a) du stabilisateur (30), ou est en contact dans la configuration de la construction avec la zone centrale (30a) du stabilisateur (30).

13. Structure de dessous de caisse selon l'une des revendications 6 à 12, **caractérisée en ce que** les bras (30b) du stabilisateur (30) dépassant vers l'arrière sont placés par le biais d'une courbure convexe, notamment une courbure d'environ 90 degrés autour d'au moins un ensemble (26) et/ou élément (28) transversal au niveau du faux-châssis (10).

14. Structure de dessous de caisse selon la revendication 13, **caractérisée en ce que** les bras (30b) du stabilisateur (30) sont placés autour d'un engrenage à crémaillère (26) monté sur le faux-châssis (10) et/ou autour de ses barres d'accouplement (28).
